# EUROPEAN PATENT APPLICATION

(11) **EP 4 734 534 A1**
(43) Date of publication of application: **29.04.2026**
(21) Application number: 23943452.5
(22) Date of filing: 22.12.2023
(51) Int. Cl.: H04N 21/4335

(54) **AUDIO DATA STORAGE METHOD AND APPARATUS FOR MULTI-CAMERA DEVICE, AND ELECTRONIC DEVICE**

(30) Priority: 26.06.2023 CN 202310762912
(71) Applicant: Zhejiang Uniview Technologies Co., Ltd., Hangzhou, Zhejiang 310051 (CN)
(72) Inventor: ZHU, Jiejin, Hangzhou, Zhejiang 310051 (CN)
(74) Representative: De Ros, Alberto
(86) International application number: PCT/CN2023/140804
(87) International publication number: WO 2025/000980

(57) **Abstract**

The present disclosure relates to the technical field of photography, and provides an audio data storage method and apparatus for a multi-camera device, and an electronic device. The method comprises: obtaining first audio data acquired by camera devices located in the same region; determining a first similarity between every two pieces of first audio data; determining at least two pieces of reference audio data on the basis of the first similarities, and determining a camera device corresponding to each piece of reference audio data as a reference camera device, determining a first audio quality of each piece of reference audio data and determining target audio data on the basis of each first audio quality, and correspondingly storing storage paths of the target audio data and identifiers of the reference camera devices.

## Description

### CROSS-REFERENCES TO RELATED APPLICATIONS

The present application claims priority to the Chinese patent application No. 202310762912.1 filed on June 26, 2023, entitled "Audio Data Storage Method and Apparatus for Multi-Camera Device, and Electronic Device", which is incorporated herein by reference in its entirety.

### FIELD

The present application relates to the field of photography, and in particular to a method and an apparatus for storing audio data of multiple camera devices, and an electronic device.

### BACKGROUND

Video monitoring is an important component of a security system. At monitored intersections of roads, multiple camera devices are usually deployed for different monitoring purposes. Or in a home environment, multiple camera devices are deployed in one space to ensure no blind spots in monitoring. Usually, the camera devices are connected to a cloud service platform or a network video recorder (NVR), and the camera devices store the collected audio and video data into the cloud service platform or the NVR storage medium, which is convenient for subsequent lookback

Audio data collected by each camera device are usually stored in a storage medium respectively.

However, for camera devices with a closer distance or in a same space, the collected audio data are basically consistent, and separately storing audio data collected by each camera device results in waste of storage resources.

### BRIEF SUMMARY

The present application provides a method and an apparatus for storing audio data of multiple camera devices, and an electronic device.

A method for storing audio data of multiple camera devices is provided according to the present application, including:
obtaining first audio data collected by each camera device located in a same area, where each piece of the first audio data is audio data within a same time period;
determining a first similarity between every two pieces of the first audio data;
determining at least two pieces of reference audio data based on each of the first similarity, and determining a camera device corresponding to each piece of the reference audio data as a reference camera device;
determining a first audio quality of each piece of the reference audio data; and
determining target audio data based on each first audio quality, and storing a storage path of the target audio data correspondingly with an identifier of each reference camera device respectively.

An apparatus for storing audio data of multiple camera devices is also provided according to the present application, including:
a first obtaining unit, configured to obtain first audio data collected by each camera device located in a same area, where each piece of the first audio data is audio data within a same time period;
a first determining unit, configured to determine a first similarity between every two pieces of the first audio data;
a second determining unit, configured to determine at least two pieces of reference audio data based on each of the first similarity, and determine a camera device corresponding to each piece of the reference audio data as a reference camera device;
a third determining unit, configured to determine a first audio quality of each piece of the reference audio data; and
a first storing unit, configured to determine target audio data based on each first audio quality, and store a storage path of the target audio data correspondingly with an identifier of each reference camera device respectively.

An electronic device is also provided according to the present application, including a memory, a processor, and a computer program stored in the memory and executed in the processor, where the processor implements any of methods for storing audio data of multiple camera devices described above when executing the computer program.

A non-transient computer-readable storage medium is also provided according to the present application, storing a computer program, and the computer program implements any of methods for storing audio data of multiple camera devices described above when executed by a processor.

A computer program product is also provided according to the present application, including a computer program, and the computer program implements any of methods for storing audio data of multiple camera devices described above when executed by a processor.

According to the method and the apparatus for storing audio data of multiple camera devices and the electronic device provided by the present application, the first audio data collected by each camera device located in the same area is obtained, at least two pieces of the reference audio data are determined based on the first similarity between every two pieces of the first audio data, the camera device corresponding to each piece of the reference audio data is determined as the reference camera device, the first audio quality of each piece of the reference audio data is determined, the target audio data is determined based on each first audio quality, and finally the storage path of the target audio data is respectively stored corresponding to the identifier of each reference camera device.

### BRIEF DESCRIPTION OF THE DRAWINGS

FIG. 1 is a first schematic flowchart of a method for storing audio data of multiple camera devices according to an embodiment of the present application;
FIG. 2 is a second schematic flowchart of a method for storing audio data of multiple camera devices according to an embodiment of the present application;
FIG. 3 is a third schematic flowchart of a method for storing audio data of multiple camera devices according to an embodiment of the present application;
FIG. 4 is a fourth schematic flowchart of a method for storing audio data of multiple camera devices according to an embodiment of the present application;
FIG. 5 is a schematic structural diagram of an apparatus for storing audio data of multiple camera devices according to an embodiment of the present application; and
FIG. 6 is a schematic structural diagram of an electronic device according to an embodiment of the present application.

### DETAILED DESCRIPTION

The solutions in the present application will be described below in conjunction with the accompanying drawings in the present application. The described embodiments are only part of the embodiments of the present application, but not all of the embodiments.

Video monitoring is an important component of a security system. At monitored intersections of roads, multiple camera devices are usually deployed for different monitoring purposes. Or in a home environment, multiple camera devices are deployed in one space to ensure no blind spots in monitoring. Usually, the camera devices are connected to a cloud service platform or an network video recorder (NVR), and the camera devices store the collected audio and video data into the cloud service platform or the NVR storage medium, which is convenient for subsequent lookback During storage, audio data collected by each camera device are usually stored in a storage medium respectively. For camera devices with a closer distance or in a same space, since the monitoring positions are different, the video data thereof are reasonable to be separately stored. However, for camera devices with the closer distance or in the same space, the collected audio data are basically consistent, and separately storing audio data collected by each camera device results in waste of storage resources. Although the audio data is relatively small relative to the video data, since the monitoring system works continuously, the longer the working time, the more space occupied by the audio data.

Embodiments of the present application provide a method for storing audio data of multiple camera devices. Reference camera devices corresponding to similar audio data are determined based on first audio data collected by each camera device located in a same area, and then a final target audio data is determined based on an audio quality of reference audio data collected by each reference camera device. Only the target audio data is associated with an identifier of each reference camera device and then stored, without storing audio data collected by each reference camera device, thereby saving storage resources.

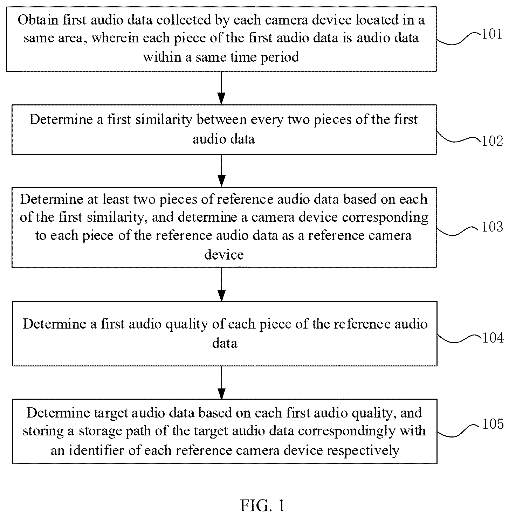

A method for storing audio data of multiple camera devices according to the present application is described below in conjunction with FIGs 1-4.

The execution subject of the present method may be an electronic device such as a computer, a network video recorder (NVR), a server, a cloud server, or a server cluster, or may be an apparatus for storing audio data of multiple camera devices disposed in the electronic device, and the storage of the audio data of multiple camera devices may be implemented by software, hardware, or a combination of the two. The method may be applied to any scenario in which audio data needs to be stored, for example, in a scenario where multiple camera devices are deployed at a monitoring intersection of roads, or in a scenario in which multiple camera devices are deployed in a same area.

FIG. 1 is a first schematic flowchart of a method for storing audio data of multiple camera devices according to an embodiment of the present application, as shown in FIG. 1, the method for storing audio data of multiple camera devices includes following steps.

Step101, obtaining first audio data collected by each camera device located in a same area, where each piece of the first audio data is audio data within a same time period.

In an embodiment, the same area refers to a same intersection or a same room, and deployment positions between the camera devices in the same area are relatively close. After the camera devices register with the electronic device and are online, the camera devices may be grouped on the electronic device, and the group may be implemented in the following two manners. In a first manner, a user manually performs group management on each camera device connected to the electronic device, and classifies the camera devices in the same area into a same group. In a second manner, a deployment position of a corresponding camera device is obtained by a built-in positioning module in the camera device, a distance between every two deployment positions is determined, and camera devices corresponding to a distance less than a preset distance are determined as camera devices in the same area, and are classified into the same group. An identifier of each camera device in the same group is added to a corresponding camera device list. Audio data collected by each camera device in the same area may be similar. Therefore, according to the present application, the first audio data collected by the each camera device located in the same area are obtained to analyze each piece of the first audio data. The same time period means that the start timings of the collected audio are the same, and the end timings of the collected audio are also the same. For example, the first audio data is a piece of audio data recording from 2:10 to 2:10:10.

As shown in Table 1, it is assumed that five camera devices are included in the same area, the identifiers of the five camera devices are IPC1, IPC2, IPC3, IPC4, and IPC5. IPC1, IPC2, IPC3, and IPC4 are classified into a group G1. IPC5 is classified into a group G2. Correspondences between the group identifier G1 and the camera device identifiers IPC1, IPC2, IPC3, and IPC4 are respectively stored in the camera device list. A correspondence between the group identifier G2 and the camera device identifier IPC5 is stored in the camera device list.

**Table1**

| Group Identifier | Camera Device Identifier |
|---|---|
| G1 | IPC1 |
| G1 | IPC2 |
| G1 | IPC3 |
| G1 | IPC4 |
| G2 | IPC5 |

It should be noted that each camera device in the same area is a camera device having an audio data storage requirement, that is, an audio collection function of each camera device is on.

Step 102, determining a first similarity between every two pieces of the first audio data.

In an embodiment, the first similarity between every two pieces of the first audio data may be determined based on an audio similarity algorithm in case of obtaining the first audio data within the same time period collected by each camera device located in the same area. The audio similarity algorithm may be an algorithm such as a dynamic time warping (DTW) algorithm or a Euclidean distance algorithm, which is not limited in the present application.

It should be noted that, each first audio data needs to be processed first in case that an audio encoding format and/or a sampling rate of each camera device is different. The sampling rate and the audio encoding format are converted to obtain audio data with consistent sampling rate and the audio encoding format, and then similarity calculation is performed

Step 103, determining at least two pieces of reference audio data based on each of the first similarity, and determining a camera device corresponding to each piece of the reference audio data as a reference camera device.

In an embodiment, after determining each first similarity, each first similarity is compared with a preset similarity. The first audio data corresponding to a first similarity greater than or equal to a preset similarity is determined as reference audio data, and a camera device corresponding to each reference audio data is determined as a reference camera device. A storage path of each reference audio data and an identifier of the corresponding reference camera device are stored in an audio similarity list La. Taking the groups in Table 1 as an example, in case that the audio data collected by IPC1, IPC2, and IPC3 in this calculation are consistent or relatively similar, IPC1 and corresponding reference audio data, IPC2 and corresponding reference audio data, and IPC3 and corresponding reference audio data are stored in the audio similarity list La.

Step 104, determining a first audio quality of each piece of the reference audio data.

In an embodiment, audio quality evaluation calculation is performed on each reference audio data in the audio similarity list La to obtain the first audio quality of each reference audio data. The audio quality evaluation algorithm may be POSQE or P.563, etc.

Step 105, determining target audio data based on each first audio quality, and storing a storage path of the target audio data correspondingly with an identifier of each reference camera device respectively.

In an embodiment, after determining the first audio quality of each reference audio data, each first audio quality is compared. The reference audio data corresponding to the first audio quality with the highest audio quality is determined as the target audio data. In case that the audio quality requirements are not high, the reference audio data corresponding to the second highest audio quality may also be determined as the target audio data, and the present application does not limit this.

In case of obtaining the target audio data, the storage path of the target audio data is stored correspondingly with the identifier of each reference camera device, that is, all reference camera devices correspond to the same audio data.

According to the method for storing audio data of multiple camera devices provided in the present application, the first audio data collected by each camera device located in the same area is obtained, at least two pieces of the reference audio data are determined based on the first similarity between every two pieces of the first audio data, the camera device corresponding to each piece of the reference audio data is determined as the reference camera device, the first audio quality of each piece of the reference audio data is determined, the target audio data is determined based on each first audio quality, and finally the storage path of the target audio data is respectively stored corresponding to the identifier of each reference camera device. According to the present application, the reference camera device corresponding to similar audio data is determined based on the first audio data collected by each camera device in the same area. Then, the final target audio data is determined based on the audio quality of the reference audio data collected by each reference camera device. Only the target audio data is associated with the identifier of each reference camera device and stored, effectively reducing the storage space occupied by duplicate audio data without storing the audio data collected by each reference camera device. Storage resources are saved, more different audio data may be stored in the same storage space, and more effective audio data may be stored.

In an embodiment, according to the step 105, storing the storage path of the target audio data correspondingly with the identifier of each reference camera device respectively may be achieved by the following manners.

A correspondence among the storage path of the target audio data, a device type of a first reference camera device corresponding to the target audio data, and an identifier of the first reference camera device is stored in an audio storage association table, where the device type of the first reference camera device is a master camera device type.

A correspondence among the storage path of the target audio data, a device type of a second reference camera device besides the first reference camera device, and an identifier of the second reference camera device is stored in the audio storage association table, where the device type of the second reference camera device is a slave camera device type.

In an embodiment, taking "storing IPC1 and corresponding reference audio data, IPC2 and corresponding reference audio data, and IPC3 and corresponding reference audio data in the audio similarity list La" as an example, it is assumed that the audio quality of the reference audio data corresponding to IPC1 is determined to be the highest from the reference audio data corresponding to IPC1, IPC2, and IPC3. The reference audio data corresponding to IPC1 is determined as the target audio data, That is, the reference audio data corresponding to IPC1 is determined as the audio data that needs to be stored. The camera device corresponding to IPC1 is determined as the master camera device, the reference audio data corresponding to IPC2 and IPC3 are discarded, and both the camera devices corresponding to IPC2 and IPC3 are determined as the slave camera device. The audio storage association table as shown in Table 2 is obtained.

**Table 2**

| Group Identifier | Device Identifier | Storage Path | Device Type | Audio Start Timing | Audio End Timing |
|---|---|---|---|---|---|
| G1 | IPC1 | /disk/storage/audio/ | master camera device type | 2:10 | -- |
| G1 | IPC2 | /disk/storage/audio/ | slave camera device type | 2:10 | -- |
| G1 | IPC3 | /disk/storage/audio/ | slave camera device type | 2:10 | -- |

It should be noted that in Table 2, the audio start timing and the audio end timing are determined based on the actual audio data that the camera device needs to store. In case that the audio data is continuously stored, the audio end timing may be empty. Table 2 uses "--" to indicate that the audio end timing is empty.

It should be noted that in order to ensure the continuity of audio data storage, each piece of audio data collected by the camera device may be stored without filtering out the final target audio data for storage. Even when the final target audio data for storage is determined, the audio data of each camera device is still collected normally. The collected audio data is uploaded to the electronic device, which is responsible for how to store each piece of received audio data.

It should be noted that when determining the target audio data as the audio data shared by each reference camera device, for each second reference camera device, that is, for each slave camera device, if the first audio data collected by the second reference camera device is very similar to the target audio data but not identical, the difference part between the first audio data collected by the second reference camera device and the target audio data may also be stored in correspondence with the identifier of the second reference camera device to ensure the integrity of the audio data corresponding to the second reference camera device. In addition, after updating the audio storage association table, the difference data between audio data may also be stored correspondingly, which will not be repeated in the present application.

In the embodiment, the correspondence among the storage path of the target audio data, the device type of the first reference camera device corresponding to the target audio data, and the identifier of the first reference camera device is stored in the audio storage association table. The correspondence among the storage path of the target audio data, the device type of the second reference camera device besides the first reference camera device, and the identifier of the second reference camera device is also stored in the audio storage association table. This facilitates users to know the device type and storage path of each camera device through the audio storage association table, achieving unified management of each reference camera device in the same area. Subsequently, corresponding audio data may be obtained based on the audio storage association table.

Considering that camera devices in the same area may be deleted, audio collection function may be turned off, offline, or powered off, as well as new camera device may be added in the same area, it is necessary to confirm whether to update the audio storage association table or reselect the source of the audio data in case that there is a change in camera devices in the same area.

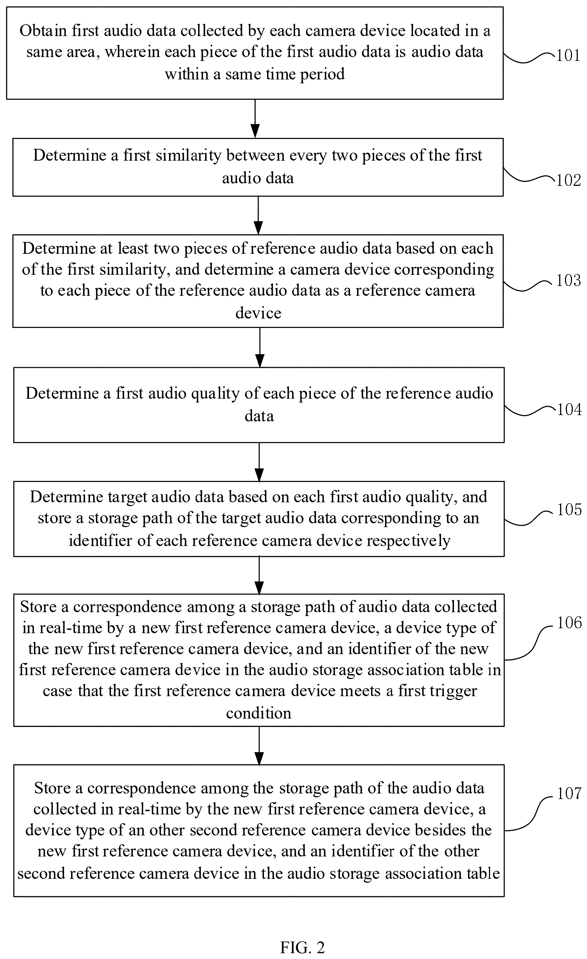

In an embodiment, the target audio data is the audio data corresponding to the first audio quality with the highest audio quality. FIG. 2 is a second schematic flowchart of a method for storing audio data of multiple camera devices according to an embodiment of the present application. As shown in FIG. 2, after step 105, the method for storing audio data of multiple camera devices further includes the following steps.

Step 106, storing a correspondence among a storage path of audio data collected in real-time by a new first reference camera device, a device type of the new first reference camera device, and an identifier of the new first reference camera device in the audio storage association table in case that the first reference camera device meets a first trigger condition, where the first trigger condition includes one of the following: deletion, offline, audio collection function turnoff, or power off, and the new first reference camera device is a second reference camera corresponding to a first audio quality with a second highest audio quality or is determined based on second audio data collected in real-time by each second reference camera device where each piece of the second audio data is audio data within a same time period.

In an embodiment, in case that the master camera device in the camera device list is deleted, offline, with the audio collection function being turned off, or powered off, a new first reference camera device needs to be determined, which is the new master camera device. The determination of the new master camera device may be achieved through the following two manners.

According to the first manner, in case of calculating the audio quality of each audio data, the audio quality may be sorted in descending order of quality. In case that the first reference camera device with the highest audio quality is deleted, offline, with the audio collection function being turned off, or powered off, the second reference camera device corresponding to the second highest audio quality may be determined as the new first reference camera device, that is, determined as the new master camera device, avoiding the steps of retriggering the similarity calculation of the audio data and audio quality evaluation and improving the efficiency of determining the new master camera equipment.

According to the second manner, the steps of similarity calculation and audio quality evaluation of audio data are retriggered. That is, the second audio data collected in real-time by each second reference camera device is obtained, the similarity between any two pieces of the second audio data is determined, and audio data with similarity greater than the preset similarity are determined as the new reference audio data. The audio quality of each piece of the new reference audio data is determined, and the reference camera device corresponding to the new reference audio data with the highest audio quality is determined as the new first reference camera device, which is also the new master camera device.

Step 107, storing a correspondence among the storage path of the audio data collected in real-time by the new first reference camera device, a device type of an other second reference camera device besides the new first reference camera device, and an identifier of the other second reference camera device in the audio storage association table.

In an embodiment, the correspondence among the storage path of audio data collected in real-time by the new first reference camera device, the device type of the new first reference camera device, and the identifier of the new first reference camera device is stored in the audio storage association table in case of determining the new first reference camera device. The correspondence among the storage path of the audio data collected in real-time by the new first reference camera device, the device type of the other second reference camera device besides the new first reference camera device, and the identifier of the other second reference camera device is stored in the audio storage association table.

Table 3 is the updated audio storage association table in case that the first reference camera device meets the first trigger condition. As shown in Table 3, it is assumed that IPC1 is deleted, offline, with the audio collection function being turned off, or powered off at 2:20, the second audio data is the audio data collected from 2:20. The identifier of the new master camera device is determined as IPC2, and the storage path of the second audio data collected by the camera device corresponding to IPC2 is "/disk/storage/audio1/". Then, the device type corresponding to IPC2 is set as the master camera device type. That is the correspondence among IPC2, "/disk/storage/audio1/", the master camera device type, and the audio start timing of 2:20 is stored in Table 3. If the camera device corresponding to IPC2 is continuously collecting audio, the audio end timing may be empty, and the correspondence among IPC3, "/disk/storage/audio1/", slave camera device type, and audio start timing of 2:20 is stored. The audio storage association table is updated in case that the first reference camera device meets the first trigger condition. The camera device corresponding to IPC3 are the other second reference camera devices.

**Table 3**

| Group Identifier | Device Identifier | Storage Path | Device Type | Audio Start Timing | Audio End Timing |
|---|---|---|---|---|---|
| G₁ | IPC₁ | /disk/storage/audio/ | master camera device type | 2:10 | 2:20 |
| G₁ | IPC₂ | /disk/storage/audio/ | slave camera device type | 2:10 | 2:20 |
| G₁ | IPC₃ | /disk/storage/audio/ | slave camera device type | 2:10 | 2:20 |
| G₁ | IPC₂ | /disk/storage/audio1/ | master camera device type | 2:20 | -- |
| G₁ | IPC₃ | /disk/storage/audio1/ | slave camera device type | 2:20 | -- |

It should be noted that in case that the first reference camera device is deleted, that is, in case that the master camera device is deleted, the records associated with the first reference camera device in the audio storage association table may be deleted. For example, in case that the identifier of the master camera device in Table 3 is IPC1, the first row of records in Table 3 may be deleted. If the storage space is large enough, the records associated with the first reference camera device may not be deleted, and the present application does not limit this.

In the embodiment, in case that the master camera device is deleted, offline, with the audio collection function being turned off, or powered off, the new master camera device is determined and the audio storage association table is updated in a timely manner, achieving real-time maintenance of the audio storage association table to ensure that the stored audio data is the optimal audio data, while also ensuring the integrity of the monitored audio data.

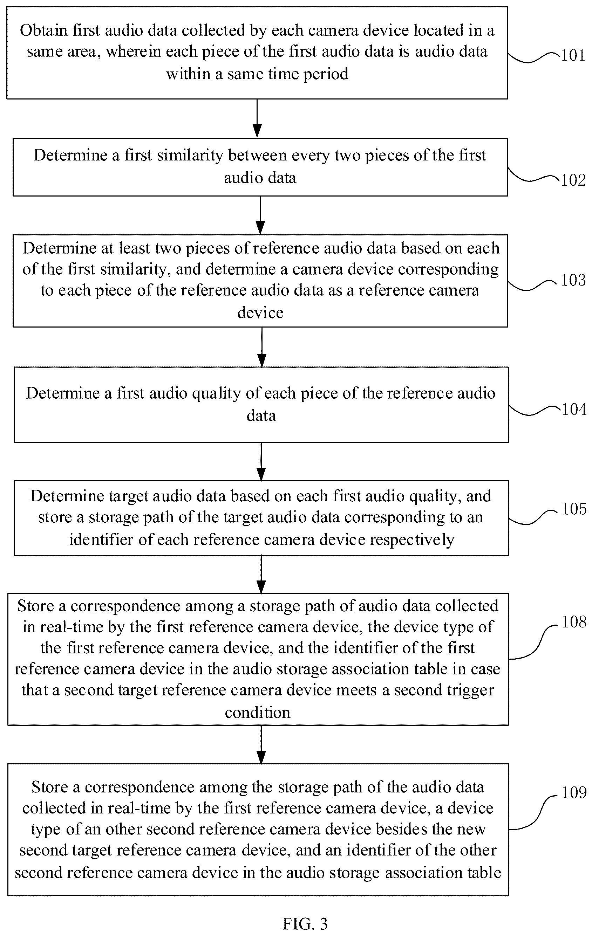

In an embodiment, FIG. 3 is a third schematic flowchart of a method for storing audio data of multiple camera devices according to an embodiment of the present application. As shown in FIG. 3, after step 105, the method for storing audio data of the multiple camera devices further includes the following steps.

Step 108, storing a correspondence among a storage path of audio data collected in real-time by the first reference camera device, the device type of the first reference camera device, and the identifier of the first reference camera device in the audio storage association table in case that a second target reference camera device meets a second trigger condition, where the second trigger condition includes one of the following: deletion, offline, audio collection function turnoff, or power off.

Step 109: storing a correspondence among the storage path of the audio data collected in real-time by the first reference camera device, a device type of an other second reference camera device besides the new second target reference camera device, and an identifier of the other second reference camera device in the audio storage association table.

In an embodiment, in case that the camera device is deleted from the camera device list, offline, with the audio collection function being turned off, or powered off, only the audio storage association table needs to be updated. The specific update method is as follows.

The correspondence among the storage path of audio data collected in real-time by the first reference camera device, the device type of the first reference camera device, and the identifier of the first reference camera device in the audio storage association table is stored in the audio storage association table. The correspondence among the storage path of the audio data collected in real-time by the first reference camera device, the device type of the other second reference camera device besides the new second target reference camera device, and the identifier of the other second reference camera device in the audio storage association table is stored in the audio storage association table.

Table 4 is the updated audio storage association table in case that the second target reference camera device meets the second trigger condition. As shown in Table 4, it is assumed that the identifier of the second target reference camera device is IPC2 and IPC2 is deleted, offline, with the audio collection function being turned off, or powered off at 2:20. The audio data collected in real-time by the first reference camera device is the audio data collected from 2:20. The storage path of the audio data collected in real-time by the first reference camera device IPC1 is "/disk/storage/audio/". Then, the correspondence among IPC1, "/disk/storage/audio/", the master camera device type, and the audio start timing of 2:20 is stored in Table 4. If the camera device corresponding to IPC 1 is continuously collecting audio, the audio end timing may be empty, and the correspondence among IPC3, "/disk/storage/audio/", slave camera device type, and audio start timing of 2:20 is stored. The audio storage association table is updated in case that the second target reference camera device meets the second trigger condition. The camera device corresponding to IPC3 are the other second reference camera devices.

**Table 4**

| Group Identifier | Device Identifier | Storage Path | Device Type | Audio Start Timing | Audio End Timing |
|---|---|---|---|---|---|
| G₁ | IPC₁ | /disk/storage/audio/ | master camera device type | 2:10 | 2:20 |
| G₁ | IPC₂ | /disk/storage/audio/ | slave camera device type | 2:10 | 2:20 |
| G₁ | IPC₃ | /disk/storage/audio/ | slave camera device type | 2:10 | 2:20 |
| G₁ | IPC₁ | /disk/storage/audio/ | master camera device type | 2:20 | -- |
| G₁ | IPC₃ | /disk/storage/audio/ | slave camera device type | 2:20 | -- |

It should be noted that in case that the second target reference camera device is deleted, that is, in case that the second target reference camera device is deleted from the camera device, the records associated with the second target reference camera device in the audio storage association table may be deleted. For example, in case that the identifier of the second target reference camera device in Table 4 is IPC2, the second row of records in Table 4 may be deleted. If the storage space is large enough, the records associated with the second target reference camera device may not be deleted, and the present application does not limit this.

In the embodiment, in case that the slave camera device is deleted, offline, with the audio collection function being turned off, or powered off, the audio storage association table is updated in a timely manner, achieving real-time maintenance of the audio storage association table to ensure that the stored audio data is the optimal audio data, while also ensuring the integrity of the monitored audio data.

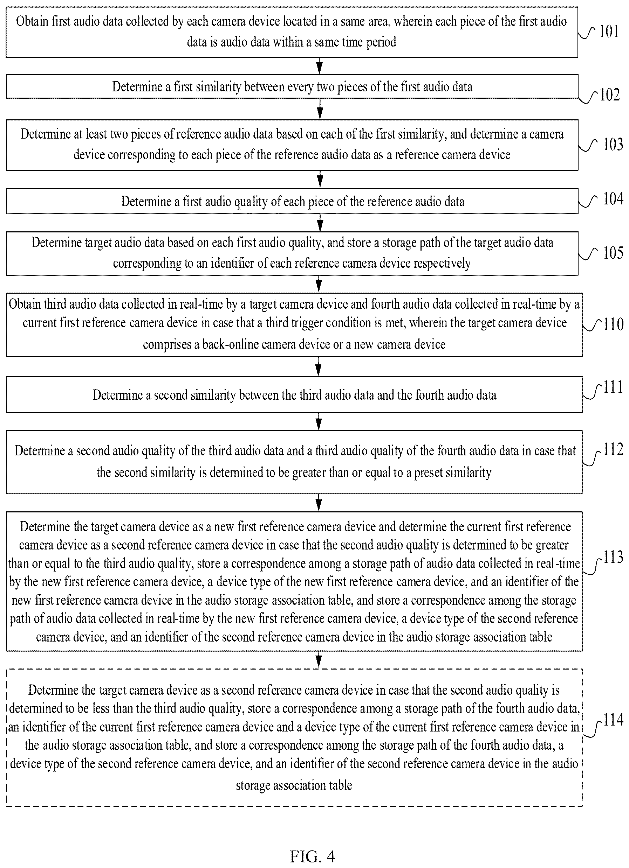

In an embodiment, FIG. 4 is a fourth schematic flowchart of a method for storing audio data of multiple camera devices according to an embodiment of the present application. As shown in FIG. 4, after step 105, the method for storing audio data of the multiple camera devices further includes the following steps.

Step 110, obtaining third audio data collected in real-time by a target camera device and fourth audio data collected in real-time by a current first reference camera device in case that a third trigger condition is met, where the target camera device includes a back-online camera device or a new camera device, the third trigger condition is that any camera device in the same area is back-online or a new camera device is added to the same area, and the third audio data and the fourth audio data are audio data within a same time period.

In the embodiment, any back-online camera device in the same area refers to any camera device in the same area being deleted and then reconnected again, or any camera device in the same area being offline and then reconnected again, or any camera device in the same area turning off the audio collection function and then turning on the audio collection function again, or any camera device in the same area being powered off and then powered on again.

In the embodiment, in case that the target camera device in the same area meets the third triggering condition, that is, in case that any camera device in the same area is reconnected or a new camera device is added to the same area, the third audio data collected in real-time by the target camera device and the fourth audio data collected in real-time by the current first reference camera device are obtained. The fourth audio data collected in real-time by the current first reference camera device is also the audio data collected by the current master camera device.

Step 111, determining a second similarity between the third audio data and the fourth audio data.

In an embodiment, the similarity between the third audio data and the fourth audio data is determined in case that the third audio data and the fourth audio data are obtained. The second similarity between the third audio data and the fourth audio data may be determined based on the audio similarity algorithm, where the audio similarity algorithm may be algorithms such as DTW or Euclidean distance algorithm, and the present application does not limit this.

Step 112, determining a second audio quality of the third audio data and a third audio quality of the fourth audio data in case that the second similarity is determined to be greater than or equal to a preset similarity.

In an embodiment, in case that the second similarity is calculated, the second similarity is compared with the preset similarity. In case that the second similarity is determined to be less than the preset similarity, it indicates that the third audio data collected by the target camera device is not similar to the fourth audio data collected by the current first reference camera device, and the target camera device and the current first reference camera device are not suitable for sharing the same audio data. In case that the second similarity is determined to be greater than or equal to the preset similarity, it indicates that the third audio data collected by the target camera device is consistent or similar to the fourth audio data collected by the current first reference camera device, and the target camera device and the current first reference camera device are not suitable for sharing the same audio data. Therefore, it is necessary to further determine the audio quality of the third audio data and the fourth audio data.

Step 113, determining the target camera device as a new first reference camera device and determining the current first reference camera device as a second reference camera device in case that the second audio quality is determined to be greater than or equal to the third audio quality, storing a correspondence among a storage path of audio data collected in real-time by the new first reference camera device, a device type of the new first reference camera device, and an identifier of the new first reference camera device in the audio storage association table, and storing a correspondence among the storage path of audio data collected in real-time by the new first reference camera device, a device type of the second reference camera device, and an identifier of the second reference camera device in the audio storage association table.

In an embodiment, in case that the second audio quality of the third audio data is determined to be greater than or equal to the third audio quality of the fourth audio data, it indicates that the quality of the audio data collected by the target camera device is greater than the quality of the audio data collected by the current master camera device. At this time, the target camera device may be used as the new first reference camera device, that is, as the new master camera device. The previous first reference camera device may be used as the second reference camera device that is, the current master camera device may be used as the slave camera device. At this time, the slave camera devices in the same area include the current first reference camera device and other second reference camera devices.

Table 5 is the updated audio storage association table in case that the target camera device is a newly added camera device in the same area, and the second audio quality of the third audio data is determined to be greater than or equal to the third audio quality of the fourth audio data. As shown in Table 5, it is assumed that the target camera device is a new camera device, and the identifier of the new camera device is IPC6. It is assumed that the new camera device is online at 2:20, then the audio data collected in real-time by the new camera device is the audio data collected from 2:20. The storage path of the audio data collected in real-time by the new camera device is "/disk/storage/audio2/". The correspondence among IPC6, "/disk/storage/audio2/", the master camera device type, and the audio start timing of 2:20 is stored in Table 5. If the camera device corresponding to IPC6 is continuously collecting audio, the audio end timing may be empty, and the correspondence among IPC1, "/disk/storage/audio2/", slave camera device type, and audio start timing of 2:20 is stored. The correspondence among IPC2, "/disk/storage/audio2/", the slave camera device type, and the audio start timing of 2:20 is stored. The correspondence among IPC3, "/disk/storage/audio2/", the slave camera device type, and the audio start timing of 2:20 is stored. The update of the audio storage association table is achieved in case that the third trigger condition was met.

**Table 5**

| Group Identifier | Device Identifier | Storage Path | Device Type | Audio Start Timing | Audio End Timing |
|---|---|---|---|---|---|
| G₁ | IPC₁ | /disk/storage/audio/ | master camera device type | 2:10 | 2:20 |
| G₁ | IPC₂ | /disk/storage/audio/ | slave camera device type | 2:10 | 2:20 |
| G₁ | IPC₃ | /disk/storage/audio/ | slave camera device type | 2:10 | 2:20 |
| G₁ | IPC₆ | /disk/storage/audio2/ | master camera device type | 2:20 | -- |
| G₁ | IPC₁ | /disk/storage/audio2/ | slave camera device type | 2:20 | -- |
| G₁ | IPC₂ | /disk/storage/audio2/ | slave camera device type | 2:20 | -- |
| G₁ | IPC₃ | /disk/storage/audio2/ | slave camera device type | 2:20 | -- |

Table 6 is the updated audio storage association table in case that any camera device is back-online in the same area and the second audio quality of the third audio data is determined to be greater than or equal to the third audio quality of the fourth audio data. As shown in Table 6, it is assumed that the identifier of any camera device is IPC1, and the camera device corresponding to IPC1 is back-online at 2:30. The audio data collected in real-time by the camera device corresponding to IPC1 is the audio data collected from 2:30. The storage path of the audio data collected in real-time by the camera device corresponding to IPC1 is "/disk/storage/audio/". The correspondence among IPC1, "/disk/storage/audio/", the master camera device type, and the audio start timing of 2:30 is stored in Table 6. If the camera device corresponding to IPC1 is continuously collecting audio, the audio end timing may be empty, and the correspondence among IPC2, "/disk/storage/audio/", slave camera device type, and audio start timing of 2:30 is stored. The correspondence among IPC3, "/disk/storage/audio/", the slave camera device type, and the audio start timing of 2:30 is stored.

**Table 6**

| Group Identifier | Device Identifier | Storage Path | Device Type | Audio Start Timing | Audio End Timing |
|---|---|---|---|---|---|
| G₁ | IPC₁ | /disk/storage/audio/ | master camera device type | 2:10 | 2:20 |
| G₁ | IPC₂ | /disk/storage/audio/ | slave camera device type | 2:10 | 2:20 |
| G₁ | IPC₃ | /disk/storage/audio/ | slave camera device type | 2:10 | 2:20 |
| G₁ | IPC₂ | /disk/storage/audio1/ | master camera device type | 2:20 | 2:30 |
| G₁ | IPC₃ | /disk/storage/audio1/ | slave camera device type | 2:20 | 2:30 |
| G₁ | IPC₁ | /disk/storage/audio/ | master camera device type | 2:30 | -- |
| G₁ | IPC₂ | /disk/storage/audio/ | slave camera device type | 2:30 | -- |
| G₁ | IPC₃ | /disk/storage/audio/ | slave camera device type | 2:30 | -- |

Step 114, determining the target camera device as a second reference camera device in case that the second audio quality is determined to be less than the third audio quality, storing a correspondence among a storage path of the fourth audio data, an identifier of the current first reference camera device and a device type of the current first reference camera device in the audio storage association table, and storing a correspondence among the storage path of the fourth audio data, a device type of the second reference camera device, and an identifier of the second reference camera device in the audio storage association table.

In an embodiment, in case that the second audio quality of the third audio data is determined to be less than the third audio quality of the fourth audio data, it indicates that the quality of the audio data collected by the target camera device is determined to be less than the quality of the audio data collected by the current master camera device. At this time, the target camera device may be used as the second reference camera device, that is, the target camera device may be used as the slave camera device and the master camera device remains unchanged.

Table 7 is the updated audio storage association table in case that the target camera device is a newly added camera device in the same area, and the second audio quality of the third audio data is determined to be less than the third audio quality of the fourth audio data. As shown in Table 7, it is assumed that the target camera device is a new camera device, and the identifier of the new camera device is IPC6. It is assumed that the new camera device is online at 2:20 and the identifier of the current first reference camera device is IPC1.The audio data collected in real-time by the current first reference camera device is the audio data collected from 2:20. The storage path of the audio data collected in real-time by the current first reference camera device is "/disk/storage/audio/". The correspondence among IPC1, "/disk/storage/audio/", the master camera device type, and the audio start timing of 2:20 is stored in Table 7. If the camera device corresponding to IPC1 is continuously collecting audio, the audio end timing may be empty, and the correspondence among IPC2, "/disk/storage/audio/", slave camera device type, and audio start timing of 2:20 is stored. The correspondence among IPC3, "/disk/storage/audio/", the slave camera device type, and the audio start timing of 2:20 is stored. The correspondence among IPC6, "/disk/storage/audio/", the slave camera device type, and the audio start timing of 2:20 is stored. The update of the audio storage association table is achieved in case that the third trigger condition was met.

**Table 7**

| Group Identifier | Device Identifier | Storage Path | Device Type | Audio Start Timing | Audio End Timing |
|---|---|---|---|---|---|
| G₁ | IPC₁ | /disk/storage/audio/ | master camera device type | 2:10 | 2:20 |
| G₁ | IPC₂ | /disk/storage/audio/ | slave camera | 2:10 | 2:20 |
| | | | device type | | |
| G₁ | IPC₃ | /disk/storage/audio/ | slave camera device type | 2:10 | 2:20 |
| G₁ | IPC₁ | /disk/storage/audio/ | master camera device type | 2:20 | -- |
| G₁ | IPC₂ | /disk/storage/audio/ | slave camera device type | 2:20 | -- |
| G₁ | IPC₃ | /disk/storage/audio/ | slave camera device type | 2:20 | -- |
| G₁ | IPC₆ | /disk/storage/audio/ | slave camera device type | 2:20 | -- |

Table 8 is the updated audio storage association table in case that the target camera device is any back-online camera device in the same area and the second audio quality of the third audio data is determined to be less than the third audio quality of the fourth audio data. As shown in Table 8, it is assumed that the identifier of any camera device is IPC2, and the camera device corresponding to IPC2 is back-online at 2:30. At this time, the master camera device is the camera device corresponding to IPC1. The audio data collected in real-time by the camera device corresponding to IPC1 is the audio data collected from 2:30. The storage path of the audio data collected in real-time by the camera device corresponding to IPC1 is "/disk/storage/audio/". The correspondence among IPC1, "/disk/storage/audio/", the master camera device type, and the audio start timing of 2:30 is stored in Table 8. If the camera device corresponding to IPC1 is continuously collecting audio, the audio end timing may be empty, and the correspondence among IPC2, "/disk/storage/audio/", slave camera device type, and audio start timing of 2:30 is stored. The correspondence among IPC3, "/disk/storage/audio/", the slave camera device type, and the audio start timing of 2:30 is stored. The update of the audio storage association table is achieved in case that the third trigger condition was met.

**Table 8**

| Group Identifier | Device Identifier | Storage Path | Device Type | Audio Start Timing | Audio End Timing |
|---|---|---|---|---|---|
| G₁ | IPC₁ | /disk/storage/audio/ | master camera device type | 2:10 | 2:20 |
| G₁ | IPC₂ | /disk/storage/audio/ | slave camera device type | 2:10 | 2:20 |
| G₁ | IPC₃ | /disk/storage/audio/ | slave camera device type | 2:10 | 2:20 |
| G₁ | IPC₁ | /disk/storage/audio/ | master camera device type | 2:20 | 2:30 |
| G₁ | IPC₃ | /disk/storage/audio/ | slave camera device type | 2:20 | 2:30 |
| G₁ | IPC₁ | /disk/storage/audio/ | master camera device type | 2:30 | -- |
| G₁ | IPC₂ | /disk/storage/audio/ | slave camera device type | 2:30 | -- |
| G₁ | IPC₃ | /disk/storage/audio/ | slave camera device type | 2:30 | -- |

In the embodiment, in case that any camera device is back-online in the same area or a new camera device is added in the same area, the audio storage association table is updated in a timely manner, achieving real-time maintenance of the audio storage association table to ensure that the stored audio data is the optimal audio data, while also ensuring the integrity of the monitored audio data.

In an embodiment, the audio storage association table further stores an audio start timing and an audio end timing corresponding to the identifier of the first reference camera device and stores an audio start timing and an audio end timing corresponding to the identifier of each second reference camera device, and the method further includes:
setting the audio end timing of the first reference camera device in the audio storage association table as a current time in case that the first reference camera device meets a first trigger condition, where the first trigger condition includes one of the following: deletion, offline, audio collection function turnoff, or power off.

In an embodiment, in Tables 2 to 8 above, the audio start timing and audio end timing corresponding to the identifier of each camera device are stored. In case that the first reference camera device is deleted, offline, with the audio collection function being turned off, or powered off, that is, in case that the master camera device is deleted, offline, with the audio collection function being turned off, or powered off, since the master camera device disconnects the collection of the audio data, the audio end timing of the master camera device may be set to the current time to ensure that the collected audio data may correspond to the video data collected by the master camera device based on the audio start timing and the audio end timing in case that the first reference camera device, meeting the first triggering condition, is used as the master camera device.

An audio end timing of a second reference camera device in the audio storage association table is set as a current time in case that the second target reference camera device meets a second trigger condition, where the second trigger condition includes one of the following: deletion, offline, audio collection function turnoff, or power off.

In an embodiment, in case that the second target reference camera device is deleted, offline, with the audio collection function being turned off, or powered off, that is, in case that the slave camera device is deleted, offline, with the audio collection function being turned off, or powered off, since the slave camera device disconnects the collection of the audio data, the audio end timing of the master camera device may be set to the current time to ensure that the audio data shared with the mater camera device may correspond to the video data collected by the slave camera device based on the audio start timing and the audio end timing in case that the second target reference camera device, meeting the second triggering condition, is used as the slave camera device.

It should be noted that since each camera device is connected to the electronic device management platform, the time of each camera device needs to be synchronized. If it is determined that the time of each camera device is not synchronized, the management platform will synchronize the time of each camera in the group to ensure that the time of each camera is consistent, thereby avoiding audio-visual desynchronization caused by subsequent time synchronization. Time synchronization of each camera device may be achieved based on the Network Time Protocol (NTP).

In the embodiment, the audio end timing of the camera device that meets the first or second triggering condition is set to the current time to ensure that the audio data may correspond to the video data based on the audio start timing and the audio end timing.

In an embodiment, after step 105, the method for storing audio data of the multiple camera devices further includes the following steps:
receiving an audio obtaining request sent by a terminal device, where the audio obtaining request includes a target time period; obtaining audio data corresponding to the target time period from the audio storage association table; and sending the audio data corresponding to the target time period to the terminal device.

In an embodiment, in case that a user needs to view audio data from historical monitoring, the may enter a target time period on the terminal device and click the button for obtaining historical data. That is, sending a instruction for obtaining historical data to the terminal device, causing the terminal device to respond to the instruction and to send an a request for obtaining audio including the target time period, to the electronic device. The electronic device searches for the audio storage path corresponding to the target time period in the audio storage association table, obtains the corresponding audio data based on the found audio storage path, and sends the audio data to the terminal device.

Furthermore, each camera device may also send the collected video data to an electronic device. For each camera device, the electronic device stores the video data sent by the camera device in correspondence with the corresponding time period. In case of receiving a request for obtaining audio, the electronic device may also obtain the corresponding video data based on the target time period and merge the video data and audio data within the target time period before sending them to the terminal device. The video data and audio data of the target time period may also be separately sent to the terminal device, and the present application does not limit this.

In the embodiment, in case of obtaining request for obtaining the audio sent by the terminal device, the corresponding audio data may be searched in the audio storage association table based on the target time period included in the request for obtaining the audio, and the audio data corresponding to the target time period may be sent to the terminal device to ensure that the user may view the historical monitored audio data.

In an embodiment, determining the first audio quality of each piece of the reference audio data may be achieved by the following manners:
obtaining fifth audio data collected by each camera device in case that each piece of the first audio data is silent data, where each piece of the fifth audio data is audio data within a same time period; determining a third similarity between every two pieces of the fifth audio data in case that at least one piece of the fifth audio data is non-silent data; updating at least two pieces of reference audio data based on each of the third similarity; and determining the first audio quality of each updated reference audio data.

The fifth audio data is the audio data collected after the first audio data.

In an embodiment, there may be a situation where there is no sound in the space when a camera device is online, which may lead to the determined reference audio data is inaccurate. In order to improve the accuracy of the determined reference audio data, a sound similarity detection needs to be triggered again in case that at least one piece of the fifth audio data collected by each camera device in the same area is non-silent. That is, the third similarity between every two piece of the fifth audio data needs to be determined. The fifth audio data corresponding to the third similarity greater than or equal to the preset similarity may be determined as the reference audio data, thereby updating the previous reference audio data and making the obtained audio similarity list La more accurate.

It should be noted that sound can be detected in case that the camera device is online, so there is no need to follow the process in the embodiment. Since the phenomenon of no sound is still suitable for multiple camera devices to share the same audio data, this solution is also applicable.

In the embodiment, in case that each piece of the first audio data is silent, the fifth audio data collected by each camera device is necessary to be obtained again and the sound similarity detection is triggered again to update the previously determined reference audio data so that the audio similarity list is more accurate.

The apparatus for storing audio data of multiple camera devices according to an embodiment of the present application is be described below. The apparatus for storing audio data of multiple camera devices described below may be corresponding to the method for storing audio data of multiple camera devices described above.

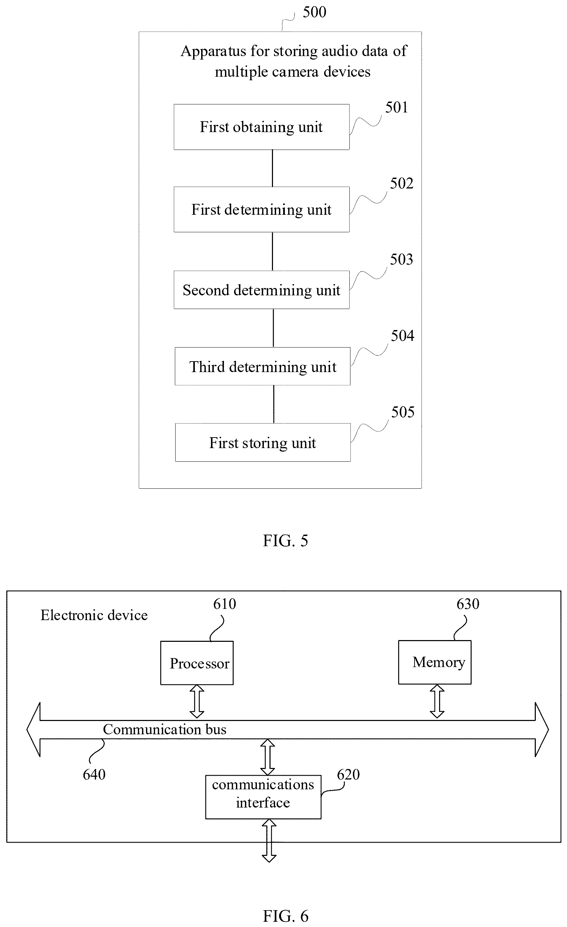

FIG. 5 is a schematic structural diagram of an apparatus for storing audio data of multiple camera devices according to an embodiment of the present application. As shown in FIG. 5, the apparatus 500 includes a first obtaining unit 501, a first determining unit 502, a second determining unit 503, a third determining unit 504, and a first storing unit 505;
where the first obtaining unit 501 is configured to obtain first audio data collected by each camera device located in a same area, where each piece of the first audio data is audio data within a same time period;
the first determining unit 502 is configured to determine a first similarity between every two pieces of the first audio data;
the second determining unit 503 is configured to determine at least two pieces of reference audio data based on each of the first similarity, and determine a camera device corresponding to each piece of the reference audio data as a reference camera device;
the third determining unit 504 is configured to determine a first audio quality of each piece of the reference audio data; and
the first storing unit 505 is configured to determine target audio data based on each first audio quality, and store a storage path of the target audio data correspondingly with an identifier of each reference camera device respectively.

According to the apparatus for storing audio data of multiple camera devices provided in the present application, the first audio data collected by each camera device located in the same area is obtained, at least two pieces of the reference audio data are determined based on the first similarity between every two pieces of the first audio data, the camera device corresponding to each piece of the reference audio data is determined as the reference camera device, the first audio quality of each piece of the reference audio data is determined, the target audio data is determined based on each first audio quality, and finally the storage path of the target audio data is respectively stored corresponding to the identifier of each reference camera device. According to the present application, the reference camera device corresponding to similar audio data is determined based on the first audio data collected by each camera device in the same area. Then, the final target audio data is determined based on the audio quality of the reference audio data collected by each reference camera device. Only the target audio data is associated with the identifier of each reference camera device and stored, effectively reducing the storage space occupied by duplicate audio data without storing the audio data collected by each reference camera device. Storage resources are saved, more different audio data may be stored in the same storage space, and more effective audio data may be stored.

According to any of the above embodiments, the first storing unit 505 is configured as follows:
storing a correspondence among the storage path of the target audio data, a device type of a first reference camera device corresponding to the target audio data, and an identifier of the first reference camera device in an audio storage association table, where the device type of the first reference camera device is a master camera device type; and
storing a correspondence among the storage path of the target audio data, a device type of a second reference camera device besides the first reference camera device, and an identifier of the second reference camera device in the audio storage association table, where the device type of the second reference camera device is a slave camera device type.

According to any of the above embodiments, the target audio data is audio data corresponding to a first audio quality with a highest audio quality and the apparatus 500 further includes:
a second storing unit, configured to store a correspondence among a storage path of audio data collected in real-time by a new first reference camera device, a device type of the new first reference camera device, and an identifier of the new first reference camera device in the audio storage association table in case that the first reference camera device meets a first trigger condition, where the first trigger condition includes one of the following: deletion, offline, audio collection function turnoff, or power off, and the new first reference camera device is a second reference camera corresponding to a first audio quality with a second highest audio quality or is determined based on second audio data collected in real-time by each second reference camera device where each piece of the second audio data is audio data within a same time period; and
a third storing unit, configured to store a correspondence among the storage path of the audio data collected in real-time by the new first reference camera device, a device type of an other second reference camera device besides the new first reference camera device, and an identifier of the other second reference camera device in the audio storage association table.

According to any of the above embodiments, the apparatus 500 further includes:
a fourth storing unit, configured to store a correspondence among a storage path of audio data collected in real-time by the first reference camera device, the device type of the first reference camera device, and the identifier of the first reference camera device in the audio storage association table in case that a second target reference camera device meets a second trigger condition, where the second trigger condition includes one of the following: deletion, offline, audio collection function turnoff, or power off; and
a fifth storing unit, configured to store a correspondence among the storage path of the audio data collected in real-time by the first reference camera device, a device type of an other second reference camera device besides the new second target reference camera device, and an identifier of the other second reference camera device in the audio storage association table.

According to any of the above embodiments, the apparatus 500 further includes:
a second obtaining unit, configured to obtain third audio data collected in real-time by a target camera device and fourth audio data collected in real-time by a current first reference camera device in case that a third trigger condition is met, where the target camera device includes a back-online camera device or a new camera device, the third trigger condition is that any camera device in the same area is back-online or a new camera device is added to in the same area is added, and the third audio data and the fourth audio data are audio data within a same time period;
a fourth determining unit, configured to determine a second similarity between the third audio data and the fourth audio data;
a fifth determining unit, configured to determine a second audio quality of the third audio data and a third audio quality of the fourth audio data in case that the second similarity is determined to be greater than or equal to a preset similarity;
a sixth storing unit, configured to determine the target camera device as a new first reference camera device and determine the current first reference camera device as a second reference camera device in case that the second audio quality is determined to be greater than or equal to the third audio quality, store a correspondence among a storage path of audio data collected in real-time by the new first reference camera device, a device type of the new first reference camera device, and an identifier of the new first reference camera device in the audio storage association table, and store a correspondence among the storage path of audio data collected in real-time by the new first reference camera device, a device type of the second reference camera device, and an identifier of the second reference camera device in the audio storage association table; and
a seventh storing unit, configured to determine the target camera device as a second reference camera device in case that the second audio quality is determined to be less than the third audio quality, store a correspondence among a storage path of the fourth audio data, an identifier of the current first reference camera device and a device type of the current first reference camera device in the audio storage association table, and store a correspondence among the storage path of the fourth audio data, a device type of the second reference camera device, and an identifier of the second reference camera device in the audio storage association table.

According to any of the above embodiments, the audio storage association table further stores an audio start timing and an audio end timing corresponding to the identifier of the first reference camera device and stores an audio start timing and an audio end timing corresponding to the identifier of each second reference camera device, and the apparatus 500 further includes:
a first setting unit, configured to set the audio end timing of the first reference camera device in the audio storage association table as a current time in case that the first reference camera device meets a first trigger condition, where the first trigger condition includes one of the following: deletion, offline, audio collection function turnoff, or power off; and
a second setting unit, configured to set an audio end timing of a second reference camera device in the audio storage association table as a current time in case that the second target reference camera device meets a second trigger condition, where the second trigger condition includes one of the following: deletion, offline, audio collection function turnoff, or power off.

According to any of the above embodiments, the apparatus 500 further includes:
a receiving unit, configured to receive an audio obtaining request sent by a terminal device, where the audio obtaining request includes a target time period;
a third obtaining unit, configured to obtain audio data corresponding to the target time period from the audio storage association table; and
a sending unit, configured to send the audio data corresponding to the target time period to the terminal device.

According to any of the above embodiments, the third determining unit 504 is configured as follows:
obtaining fifth audio data collected by each camera device in case that each piece of the first audio data is silent data, where each piece of the fifth audio data is audio data within a same time period;
determining a third similarity between every two pieces of the fifth audio data in case that at least one piece of the fifth audio data is non-silent data;
updating at least two pieces of reference audio data based on each of the third similarity; and
determining the first audio quality of each updated reference audio data.

FIG. 6 is a schematic structural diagram of an electronic device according to an embodiment of the present application. As shown in FIG. 6, the electronic device may include: a processor 610, a communications interface 620, a memory 630, and a communication bus 640, where the processor 610, the communications interface 620, and the memory 630 communicate with each other through the communication bus 640. The processor 610 calls logical instructions in the memory 630 to execute the methods for storing audio data of multiple camera devices, and the method includes: obtaining first audio data collected by each camera device located in a same area, where each piece of the first audio data is audio data within a same time period;
determining a first similarity between every two pieces of the first audio data;
determining at least two pieces of reference audio data based on each of the first similarity, and determining a camera device corresponding to each piece of the reference audio data as a reference camera device;
determining a first audio quality of each piece of the reference audio data; and
determining target audio data based on each first audio quality, and storing a storage path of the target audio data correspondingly with an identifier of each reference camera device respectively.

Furthermore, the logical instructions in the memory 630 may be implemented as software functional units and, when sold or used as independent products, may be stored in a computer-readable storage medium. Based on this understanding, the technical solution of the present application, in essence, or the part that contributes to the prior art, or a part of the technical solution, may be embodied in the form of a software product. The computer software product is stored in a storage medium and includes several instructions to cause a computer device (which may be a personal computer, server, or network device, etc.) to execute all or part of the steps of the methods described in each embodiment of the present application. The storage medium includes various media capable of storing program code, such as USB drives, portable hard drives, read-only memory (ROM), random access memory (RAM), magnetic disks, or optical disks.

A computer program product is also provided according to the present application, including a computer program, storing on a non-transient computer-readable storage medium. The computer is able to execute the methods for storing audio data of multiple camera devices provided by each of the above methods when the computer program is executed by a processor. The method includes: obtaining first audio data collected by each camera device located in a same area, where each piece of the first audio data is audio data within a same time period;
determining a first similarity between every two pieces of the first audio data;
determining at least two pieces of reference audio data based on each of the first similarity, and determining a camera device corresponding to each piece of the reference audio data as a reference camera device;
determining a first audio quality of each piece of the reference audio data; and
determining target audio data based on each first audio quality, and storing a storage path of the target audio data correspondingly with an identifier of each reference camera device respectively.

A non-transient computer-readable storage medium is also provided according to the present application, storing a computer program, and the computer program implements any of methods for storing audio data of multiple camera devices described above when executed by a processor. The method includes: obtaining first audio data collected by each camera device located in a same area, where each piece of the first audio data is audio data within a same time period;
determining a first similarity between every two pieces of the first audio data;
determining at least two pieces of reference audio data based on each of the first similarity, and determining a camera device corresponding to each piece of the reference audio data as a reference camera device;
determining a first audio quality of each piece of the reference audio data; and
determining target audio data based on each first audio quality, and storing a storage path of the target audio data correspondingly with an identifier of each reference camera device respectively.

The embodiments for apparatus described above are merely illustrative. The units described as separate components may or may not be physically separate, and the components shown as units may or may not be physical units, i.e., they may be located in one place or distributed across multiple network units. Some or all of the modules can be selected according to actual needs to achieve the purpose of this embodiment. Those skilled in the art can understand and implement this without any creative effort.

Through the description of the above embodiments, those skilled in the art can clearly understand that each embodiment may be implemented by means of software plus a necessary universal hardware platform, and of course, may also be implemented by means of hardware. Based on such understanding, the above technical solution essentially or a part contributing to the prior art may be embodied in the form of a software product, and the computer software product may be stored in a non-transient computer-readable storage medium, such as a ROM/RAM, a magnetic disk, an optical disk, etc. and includes several instructions for enabling a computer device (which may be a personal computer, a server, or a network device, etc.) to perform the method described in each embodiment or some parts of the embodiments

Finally, it should be noted that the above embodiments are only used to illustrate the technical solutions of the present application and are not limited thereto. Although the present application is described in detail with reference to the foregoing embodiments, those skilled in the art should understand that: modifications may still be made to the technical solutions described in each of the foregoing embodiments, or equivalent substitutions may be made to some of the technical features; and these modifications or substitutions do not cause the essence of the corresponding technical solutions to deviate from the scope of the technical solutions of each embodiment of the present application.

## Claims

1. A method for storing audio data of multiple camera devices, comprising:
obtaining first audio data collected by each camera device located in a same area, wherein each piece of the first audio data is audio data within a same time period;
determining a first similarity between every two pieces of the first audio data;
determining at least two pieces of reference audio data based on each of the first similarity, and determining a camera device corresponding to each piece of the reference audio data as a reference camera device;
determining a first audio quality of each piece of the reference audio data; and
determining target audio data based on each first audio quality, and storing a storage path of the target audio data correspondingly with an identifier of each reference camera device respectively.

2. The method of claim 1, wherein storing the storage path of the target audio data correspondingly with the identifier of each reference camera device respectively comprises:
storing a correspondence among the storage path of the target audio data, a device type of a first reference camera device corresponding to the target audio data, and an identifier of the first reference camera device in an audio storage association table, wherein the device type of the first reference camera device is a master camera device type; and
storing a correspondence among the storage path of the target audio data, a device type of a second reference camera device besides the first reference camera device, and an identifier of the second reference camera device in the audio storage association table, wherein the device type of the second reference camera device is a slave camera device type.

3. The method of claim 2, wherein the target audio data is audio data corresponding to the first audio quality with a highest audio quality, and the method further comprises:
storing a correspondence among a storage path of audio data collected in real-time by a new first reference camera device, a device type of the new first reference camera device, and an identifier of the new first reference camera device in the audio storage association table in case that the first reference camera device meets a first trigger condition, wherein the first trigger condition comprises one of the following: deletion, offline, audio collection function turnoff, or power off, and the new first reference camera device is a second reference camera corresponding to a first audio quality with a second highest audio quality or is determined based on second audio data collected in real-time by each second reference camera device where each piece of the second audio data is audio data within a same time period; and
storing a correspondence among the storage path of the audio data collected in real-time by the new first reference camera device, a device type of an other second reference camera device besides the new first reference camera device, and an identifier of the other second reference camera device in the audio storage association table.

4. The method of claim 2, and the method further comprises:
storing a correspondence among a storage path of audio data collected in real-time by the first reference camera device, the device type of the first reference camera device, and the identifier of the first reference camera device in the audio storage association table in case that a second target reference camera device meets a second trigger condition, wherein the second trigger condition comprises one of the following: deletion, offline, audio collection function turnoff, or power off; and
storing a correspondence among the storage path of the audio data collected in real-time by the first reference camera device, a device type of an other second reference camera device besides the new second target reference camera device, and an identifier of the other second reference camera device in the audio storage association table.

5. The method of claim 2, and the method further comprises:
obtaining third audio data collected in real-time by a target camera device and fourth audio data collected in real-time by a current first reference camera device in case that a third trigger condition is met, wherein the target camera device comprises a back-online camera device or a new camera device, the third trigger condition is that any camera device in the same area is back-online or a new camera device is added to the same area, and the third audio data and the fourth audio data are audio data within a same time period;
determining a second similarity between the third audio data and the fourth audio data;
determining a second audio quality of the third audio data and a third audio quality of the fourth audio data in case that the second similarity is determined to be greater than or equal to a preset similarity;
determining the target camera device as a new first reference camera device and determining the current first reference camera device as a second reference camera device in case that the second audio quality is determined to be greater than or equal to the third audio quality, storing a correspondence among a storage path of audio data collected in real-time by the new first reference camera device, a device type of the new first reference camera device, and an identifier of the new first reference camera device in the audio storage association table, and storing a correspondence among the storage path of audio data collected in real-time by the new first reference camera device, a device type of the second reference camera device, and an identifier of the second reference camera device in the audio storage association table; and
determining the target camera device as a second reference camera device in case that the second audio quality is determined to be less than the third audio quality, storing a correspondence among a storage path of the fourth audio data, an identifier of the current first reference camera device and a device type of the current first reference camera device in the audio storage association table, and storing a correspondence among the storage path of the fourth audio data, a device type of the second reference camera device, and an identifier of the second reference camera device in the audio storage association table.

6. The method of any of claims 2 to 5, wherein the audio storage association table further stores an audio start timing and an audio end timing corresponding to the identifier of the first reference camera device, and stores an audio start timing and an audio end timing corresponding to the identifier of each second reference camera device; the method further comprises:
setting the audio end timing of the first reference camera device in the audio storage association table as a current time in case that the first reference camera device meets a first trigger condition, wherein the first trigger condition comprises one of the following: deletion, offline, audio collection function turnoff, or power off; and
setting an audio end timing of a second reference camera device in the audio storage association table as a current time in case that the second target reference camera device meets a second trigger condition, wherein the second trigger condition comprises one of the following: deletion, offline, audio collection function turnoff, or power off.

7. The method of claim 6, and the method further comprises:
receiving an audio obtaining request sent by a terminal device, wherein the audio obtaining request comprises a target time period;
obtaining audio data corresponding to the target time period from the audio storage association table; and
sending the audio data corresponding to the target time period to the terminal device.

8. The method of any of claims 2 to 5, wherein determining the first audio quality of each piece of the reference audio data comprises:
obtaining fifth audio data collected by each camera device in case that each piece of the first audio data is silent data, wherein each piece of the fifth audio data is audio data within a same time period;
determining a third similarity between every two pieces of the fifth audio data in case that at least one piece of the fifth audio data is non-silent data;
updating at least two pieces of reference audio data based on each of the third similarity; and
determining the first audio quality of each updated reference audio data.

9. An apparatus for storing audio data of multiple camera devices, comprising:
a first obtaining unit, configured to obtain first audio data collected by each camera device located in a same area, wherein each piece of the first audio data is audio data within a same time period;
a first determining unit, configured to determine a first similarity between every two pieces of the first audio data;
a second determining unit, configured to determine at least two pieces of reference audio data based on each of the first similarity, and determine a camera device corresponding to each piece of the reference audio data as a reference camera device;
a third determining unit, configured to determine a first audio quality of each piece of the reference audio data; and
a first storing unit, configured to determine target audio data based on each first audio quality, and store a storage path of the target audio data correspondingly with an identifier of each reference camera device respectively.

10. An electronic device comprising a memory, a processor, and a computer program stored in the memory and executable in the processor, wherein the processor implements methods for storing audio data of multiple camera devices of any of claims 1 to 8 when executing the computer program.
